(19) **Europäisches Patentamt**

**European Patent Office**

**Office européen des brevets**

(11) **EP 0 495 789 B1**

(12) **EUROPEAN PATENT SPECIFICATION**

(45) Date of publication and mention
of the grant of the patent:
**31.10.2001 Bulletin 2001/44**

(51) Int Cl.⁷: **G11B 5/09**, G11B 27/36,
G11B 20/10

(21) Application number: **90912837.3**

(22) Date of filing: **22.08.1990**

(86) International application number:
**PCT/US90/04765**

(87) International publication number:
**WO 91/06094 (02.05.1991 Gazette 1991/10)**

(54) **ADAPTIVE READ/WRITE CHANNEL CONTROLS**

ADAPTIVE WIEDERGABE-/AUFZEICHNUNGSKANALSTEUERUNGEN

COMMANDES ADAPTATIVES DE CANAL DE LECTURE/ECRITURE

(84) Designated Contracting States:
**DE FR GB IT NL**

(30) Priority: **12.10.1989 US 420371**

(43) Date of publication of application:
**29.07.1992 Bulletin 1992/31**

(73) Proprietor: **Seagate Technology LLC
Scotts Valley, CA 95066 (US)**

(72) Inventors:
 • **SQUIRES, John, P.
  Boulder, CO 80455 (US)**
 • **SHRINKLE, Louis, J.
  Boulder, CO 80302 (US)**

(74) Representative: **Kenyon, Sarah Elizabeth et al
Miller Sturt Kenyon,
9 John Street
London WC1N 2ES (GB)**

(56) References cited:
**EP-A- 0 249 064        US-A- 4 796 109
US-A- 4 799 112        US-A- 4 809 088**

**Description**

Background of the Invention

Field of the Invention

The present invention is generally related to hard disk drives and, in particular, to the circuits, systems and algorithms for adaptively controlling the performance of the data read/write channel electronics to optimally match the electrical and electromagnetic characteristics of the heads and media of the disk drive.

Description of the Related Art:

The design of conventional disk drives must necessarily take into account the inevitable tolerance variations in the drive's components. In particular, the data read/write error rate is premised on the combined tolerances of the precision components that make up the largely analog data processing circuits of the read/write data channel electronics. However, the effectiveness of the channel electronics in minimizing errors is, in substantial part, also dependent on the particular construction of the hard disk assembly (HDA), including the media's coercivity and thickness, the nominal flying height of the read/write head and the head's own electromagnetic characteristics, and the specific resistive, capacitive and inductive characteristics of the electrical connection between the head and the read/write channel electronics.

In a theoretical worst case analysis, the error rate is calculated on the sum total of the worst case tolerance variances of the individual components and subsystems in the read/write data channel and HDA. As a practical matter, data error rate calculated in this manner would be extremely low. Rather, in typical practice, assembled disk drives are first tested to determine whether they meet the probable performance of the drive as designed. Once published specifications are established for the drive manufacturing line, drives are tested to determine whether they continue to meet the published specifications. Where a drive is failed due to a high data error rate, the drive is analyzed to determine the components contributing the greatest amount to the error rate. The drive, when and to the extent reasonable, is then reworked to fix or replace the error prone components or, where the cost of such repairs would be to high, simply scrapped.

Naturally, the aggregate manufacturing cost of the drives are directly increased in proportion to the number of drives that must be reworked or scrapped. A typical strategy, where higher than expected number of the drives are initially failed, is to modify if not reduce the specifications of the drive to pass sufficient numbers of the drives to make continued production commercially feasible.

A conventional alternative strategy is to implement an engineering design change to improve on the precision of the most typically failure causing components. Where the change is technically feasible, the cost of higher precision components, as well as the cost of implementing the design change, again directly impacts the aggregate cost of drive manufacture. When implemented, the design change is applied to all of the drives manufactured.

EP-A-249 064 discloses a disk drive channel circuitry that generates 8 incremental values of write current and 8 incremental values of delta-V (the minimum voltage change per unit time which tests signals to discriminate between data and noise). Each of these variable parameter values can be program selected by a 3-bit bus signal. The write current value is optimised for the data medium. The variable delta-V can also be used as an additional data recovery tool.

US-A-4 809 088 discloses a disk drive system for the implementation of write precompensation for recording of data and read window margining for accelerated testing of the disk drive.

Therefore, a general purpose of the present invention is to provide a means of adapting the read/write channel electronics to the disk drive to obtain the optimum performance from the disk drive system.

The present invention provides a disk drive characterised by the features of the characterising part of accompanying claim 1.

Thus, the abovementioned general purpose of the present invention is accomplished in the present invention by providing a disk drive system having a read/write data channel that is programmatically adaptable in processing data signals transferred to and from the read/write head. Adaptability is provided by programmable signal processing elements in the read/write data channel. The programmable elements include a read threshold element for determining whether data signals transferred from the media exceed a data discrimination level determined by a first programmable value, and a data window element for determining whether data signals transferred from the media occur within a data signal window whose timing, relative to a data clock signal, is determined by the second programmable value. Additional programmable elements include an amplifier element that is programmed to provide a corresponding level of write current and a precompensation block for providing data signal precompensation. The programmable values are determined by the disk drive uniquely for the media, read/write head and the read/write data channel.

Thus; an advantage of the present invention is that it allows the read/write channel electronics to be optimally adapted to the hard disk assembly (HDA) after assembly of the drive and without mechanical adjustments.

Another advantage of the present invention is that it allows the adaptation of the electronics to the HDA to be performed automatically and, if chosen, repeatedly.

Yet another advantage of the present invention is that it allows both data reading and writing characteristics to be adjusted independently so as to obtain optimal inter-dependent operation.

Still another advantage of the present invention is that it obtains adaptability of the read/write data channel with a minimum of additional circuitry.

Brief Description of the Drawings:

These and other advantages and features of the present invention will become apparent when considered in conjunction with the following detailed description of the present invention and the drawings, wherein like reference numerals designate like parts throughout the figures thereof, and wherein:

Figure 1 is a simplified block diagram of a disk drive control system consistent with the present invention;

Figure 2 is a simplified representation of a portion of a data track with the plurality of sectors provided thereon;

Figures 3a-b illustrate the distribution of servo control information and data in a simple, exemplary sector as provided in accordance with the present invention;

Figure 4 illustrates the task management control system flow structure of the microcontroller of the present invention in processing the servo control information of the sector shown in Figures 3a-b;

Figure 5 illustrates the detailed presentation of the servo control information of the exemplary sector, shown in Figures 3a-b, as provided in accordance with the present invention;

Figure 6 is a detail of the interconnection of the read/write control channel electronics consistent with the preferred embodiment of the present invention;

Figure 7 is a block diagram of the programmable precompensation circuit of the present invention;

Figure 8 is a block diagram of the programmable write current controller of the present invention;

Figure 9 is a block diagram of the programmable threshold detection circuit of a preferred embodiment of the present invention;

Figure 10 is a graph illustrating the operation of the programmable threshold detection circuit of a preferred embodiment of the present invention;

Figure 11 is a block diagram of the data separator circuit constructed in accordance with a preferred embodiment of the present invention;

Figure 12 is a block diagram of the programmable raw data window control circuit of a preferred embodiment of the present invention; and

Figure 13 is a graph illustrating the operation of the programmable raw data window control circuit of a preferred embodiment of the present invention.

Detailed Description of the Invention:

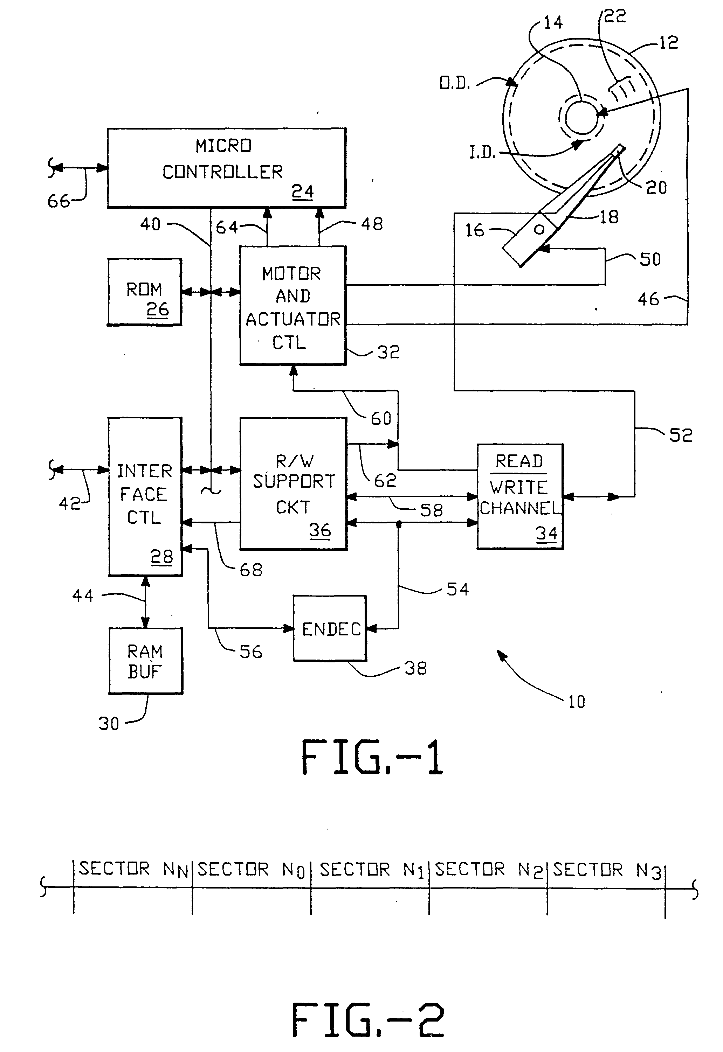

A disk drive system consistent with the principles of the present invention, generally indicated by the reference numeral 10, is shown in Figure 1. The preferred embodiments of the present invention utilize an embedded microcontroller control system to manage and direct all essential functions of the mechanical aspects of the disk drive system. The drive system includes one or more disks 12 spun in parallel planes by a spindle motor 14. Data is stored in a data track band on each surface of a disk 12 defined by an outer (OD) and inner (ID) track diameter. An actuator assembly 16, including a load beam 18 and read/write head 20 per data surface, is utilized to transfer data with respect to concentric data tracks 22 within the track band. Thus, the primary control aspects of the system 10 include controlling the spin rate of the spindle motor 14 and the control of the actuator assembly 16 in positioning of the read/write heads 20 for the transfer of data with respect to selected data tracks,

A microcontroller 24, by utilizing a minimum number of dedicated control support circuits, directly implements all of the primary functions of the drive system 10. The electronic architecture of the present invention is described in detail in the following U.S. patent applications:

U.S. Patent Application Serial No. 269,573, filed 10th November 1988 and entitled "Voice Coil Activated Disk Drive Parking Device with Magnetic Bias";

U.S. Patent Application Serial No. 07/386,504, filed 27th July 1989 entitled "Disk Drive System Using Multiple Embedded Quadrature Servo Fields", and

U.S. Patent Application Serial No. 420,370, filed 12th October 1989, entitled "Disk Drive Servo System Using Gain Limited High-Frequency Track-Following Compensator".

However, for purposes of completeness, the pertinent portions of the disclosures are set forth below.

In the preferred embodiments of the present invention, the microcontroller 24 is a three megahertz clock rate Motorola MC68HC11 HCMOS single chip microcontroller, as described in the MC68HC11A8 HCMOS Single Chip Microcomputer Technical Data Book (ADI 1207) available from Motorola, Inc., Motorola Literature Distribution, P.O. Box 20912, Phoenix, AZ, 85036.

A read-only memory (ROM) 26 is coupled to the microncontroller 24 by way of a general purpose data, address and control bus 40. The ROM 26 is utilized to store a microcontroller control program for supporting five principle tasks necessary to implement the full functionality of the disk drive system 10. These tasks include interface, actuator, spin motor, read/write and monitor.

An interface control circuit 28 is provided to support the microcontroller 24 in execution of the interface task. The interface controller 28, in a preferred asynchronous SCSI embodiment of the present invention, is implemented as a Cirrus Logic CL-SH250 Integrated SCSI Disk Controller, manufactured and distributed by Cirrus Logic, Inc., and described by their CL-SH250 Technical Data Sheet, available from Cirrus Logic, Inc., 1463 Centre Pointe Drive, Milpitas, CA 95035. A comparable synchronous SCSI interface controller, the AIC-6110, is available from Adaptec, Inc., 691 South Milpitas Boulevard, Milpitas, California 95035. A functionally equivalent interface controller, suitable for interfacing to the IBM Personal Computer Model "AT" peripheral bus, is also available from Cirrus Logic, Inc.

The interface controller 28, in general, provides a hardware interface between the disk drive system 10 and a host computer system, typically a data processing system, via a communications bus 42. The interface controller 28 utilizes a random access memory (RAM) buffer 30, accessible by a local data and control bus 44, to buffer data and commands received from or awaiting delivery to the host computer system. In this manner, the interface controller 28 is the primary manager of the bidirectional data stream between the communications bus 42 and the system 10 by way of the bus 40.

A motor and actuator controller 32 is provided as an internal interface between the microcontroller 24, the spin motor 14, and the actuator assembly 16. The controller 32 directly supports the commutation of the spin motor 14 by selectively providing commutation current to the motor 14 via the lines 46. Commutation state selection is effected by provision of a digital word from the microcontroller 24 to a commutation control latch within the controller 32. This word is used to select the field winding phase pair of the spin motor 14 that is to receive commutation current when commutation is enabled. The commutation current is switched by the controller 32 on to corresponding pairs of commutation current lines of the lines 46. A second control word, also latched by the controller 32, is used to enable the provision of commutation current.

A voltage proportional to the current conducted through the selected field winding phase pair of the spin motor 14 is provided as a current feedback voltage level, on line 48, to an analog-to-digital converter input of the microcontroller 24.

To control the actuator assembly 16, the controller 32 provides for the latched digital-to-analog conversion of a digital actuator position control word. The controller also provides voltage-to-current buffering of the resultant analog voltage. This output current is then provided on line 50 to the voice coil motor of the actuator assembly 16. The digital position control word, as provided via the bus 40 from the microcontroller 24, represents the desired actuator position. A second digital word may be written to a control register within the controller 32 to enable conversion of a newly presented digital position control word by the digital-to-analog converter.

A read/write channel controller 34, in combination with the interface controller 28, a read/write support circuit 36 and an encoder/decoder (ENDEC) 38, similarly acts as an internal control interface between the microcontroller 24 and the read/write heads 20 of the actuator assembly 16. The channel controller 36 buffers raw data transferred between the head 20, via the raw data lines 54, and the interface controller 28, via line 54, the ENDEC 38 and line 56. Raw data is also provided to the read/write support circuit 36, via line 54.

The operation of the read/write channel controller 34 is controlled by the read/write support circuit 36 via control lines 58. These control signals include servo burst gating signals for routing the received raw data, corresponding to each of four servo bursts, onto raw peak detector signal lines 60. These raw peak signals are provided through the motor and actuator controller 32, for sample-and-hold buffering, and onto lines 64 to respective analog-to-digital converter inputs of the microcontroller 24. The control lines 62 allow the read/write support circuit 36 to reset the sample-and-hold circuits.

The interface controller 28, in combination with the ENDEC 38, provides for the buffered serialization and deserialization and data clock encoding/decoding of data. However, the read/write support circuit 36, from the raw data received via line 54, is used to detect the sector mark and to acquire gray code data from each servo sector field embedded in the data tracks. A sector mark detect signal is provided via line 68 to the interface controller 28 to initiate any pending sector data processing.

Configuration and initiation of disk read/write functions by the interface controller 28 and read/write support circuit 36 are performed under the direct control of the microcontroller 24. That is, both of these controllers 28, 36 are programmable by the microcontroller 24.

The mechanical configuration of a disk drive embodying a preferred embodiment of the present invention is described in VOICE COIL ACTIVATED DISK DRIVE PARKING DEVICE WITH MAGNETIC BIAS. The aspects of the mechanical structure pertinent to the present invention are set forth in Table 1 and Table 2 below.

Table 1

| | |
|---|---|
| Number Data Cylinders | 1368 cylinders |
| Sectors per Track | 39 sectors |
| Number of Disks | 4 |
| Number of Data Surfaces | 8 |
| Bytes per Sector | 662 bytes |
| Data Bytes per Sector | 512 bytes |
| Data Capacity per Data Surface | 27.3 Mbytes |
| Total Data Capacity | 219 Mbytes |

Table 2

| | |
|---|---|
| Disk Diameter | 96 millimeters |
| Data Track Band Width | 30 millimeters |
| Track Density | 1700 tracks/inch |
| Bit Density (max) | 22,000 fci |
| Head Width | 11 micrometers |
| Track Width | 15 micrometers |

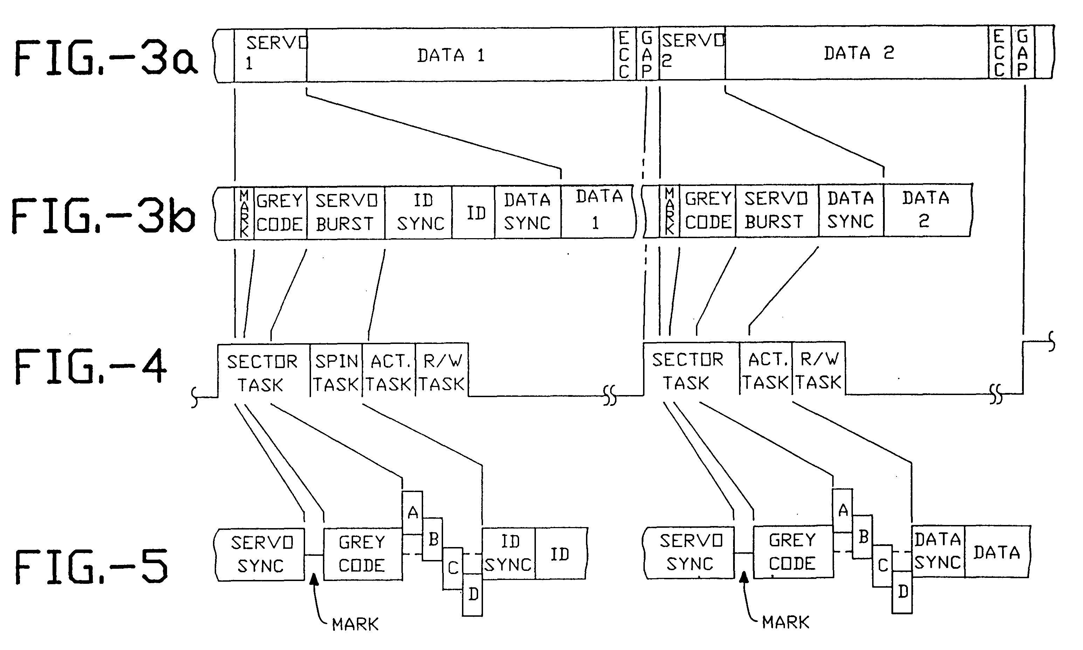

As generally represented in Figure 2, each track of the concentric data tracks 22 provided on the surface of a disk 12 are further subdivided into sectors $N_{0-n}$. In accordance with the present invention, and as generally shown in Figure 3a, each sector is composed of a servo 1 field, a data 1 field, first error correction code (ECC) field, mid-sector gap field, servo 2 field, data 2 field, second ECC field, and final gap field. As shown in Figure 3b, the servo 1 field is further composed of a servo mark field, gray code field, servo burst field, ID sync field, ID field, and data sync field. Similarly, the servo 2 field is composed of a second sector mark field, second gray code field, second servo burst field and finally, a second data sync field. The order and size of these fields are set forth in Table 3.

Table 3

| Half Sector "A" Field | Bytes | Half Sector "B" Field | Bytes |
|---|---|---|---|
| Servo Sync | 3 | Servo Sync | 3 |
| Gray Code | 8 | Gray Code | 8 |
| Servo Burst A | 4 | Servo Burst A | 4 |
| Servo Burst B | 4 | Servo Burst B | 4 |
| Servo Burst C | 4 | Servo Burst C | 4 |
| Servo Burst D | 4 | Servo Burst D | 4 |
| Pad | 1 | Pad | |
| ID Sync | 12 | Data Sync | 12 |
| ID (Header) | 4 | Data | 267 |
| ID CRC | 2 | ECC | 7 |
| Pad | 4 | Gap | 17 |
| Data Sync | 12 | | |
| Data | 245 | | |
| ECC | 7 | | |
| Gap | 17 | | |
| | | | |
| 331 Bytes (1st half) | | 662 Bytes Total | |

The sector mark fields are provided to synchronize the microcontroller with the control information present in the remaining portions of the servo 1 and 2 fields as well as the data 1 and 2 fields. The gray code fields provide an unambiguously encoded track number. The unambiguous coding of the gray code values is further qualified in that the gray code values of like sectors on adjacent tracks differ by a single bit and that no more than two consecutive zero bits are allowed in a valid gray code value.

The servo burst fields, in accordance with the preferred embodiments of the present invention, are sequentially arranged burst fields of constant amplitude and constant frequency physically offset in a pre-defined pattern from the center line of the data sector.

The ID sync field of the servo 1 field is also written at constant frequency and voltage, though physically centered on the track center line. The ID sync field allows the read/write controller to distinguish the first bit of the ID field. The ID field is used to store the cylinder, sector, and head numbers.

Finally, the data sync fields are constant frequency and amplitude fields provided to define the first bits of the respective data fields 1 and 2. The read/write controller synchronizes to the frequency of the data sync field. The first discontinuity in the sync frequency is therefore taken as the first data representative transition.

Referring now to Figure 4, task execution as performed by the microcontroller 24 is shown mapped against the real time occurrence of the servo 1 and 2 fields with respect to a read/write head 20. The basic real time relations pertinent to the present invention are set forth in Table 4.

Table 4

| | |
|---|---|
| Disk Rotational Speed | 3550 rpm |
| Average Access Time | 19 millisecs. |
| Minimum Track-to-Track Transition Time | 28 microsecs. |
| Sector Period | 433 microseconds |
| Servo Sample Rate | 4.6 KHz |
| Time Over Burst (each) | 2.665 microsecs. |
| Bytes Read per Track at Max Seek Rate | 43 bytes/track |
| Time over Gray Code | 5.33 microsecs. |

Specifically, a sector task is initiated in response to a countdown timer interrupt just prior to the occurrence of the servo 1 field. From this interrupt, the microcontroller 24 enables the read/write support circuit 36 to detect and process the sector mark field. A control value is then provided to the spin motor and actuator controller 32 to commutate the spin motor 14.

As shown in Figure 5, the sector mark field is defined by the trailing end of the servo sync filled gap field and the sector mark. The gap field is another constant amplitude constant and frequency field. The sector mark is defined as the first read data transition following the absence of any servo sync transitions for three bytes of servo sync clock cycles. The time of occurrence of the sector mark is recorded by a hardware timer within the microcontroller 24 for use in subsequent tasks as well as scheduling the countdown timer interrupt necessary for processing the servo 2 field.

During the sector task, the gray code and sector bursts are captured by the read/write support circuit 30 via the line 54 as coupled to the read/write channel controller 36. An automatic gain control circuit (AGC) is provided in the controller 34 to adjust the amplitude of the raw data signal. In anticipation of the gray code and servo burst fields, the read/write channel controller 34 is enabled by the microcontroller 24, via the read/write support circuit 36, to boost the gain of the AGC to compensate for reduced signal amplitudes. Although the AGC would automatically adjust its gain, the response time of the AGC is enhanced by direct adjustment of its gain just prior to or at the beginning of the gray code field.

Capture of the gray code by the read/write support circuit 36, though also earlier enabled by the microcontroller 24 during the servo sync corresponding portion of the sector task, is triggered internally by the sector mark signal internally produced upon detection of the sector mark. Similarly, capture of the four servo burst fields is triggered following a pre-defined delay, equal to the gray code length, following detection of the servo mark. The actual capture of the analog read amplitudes corresponding to each of the servo burst fields is performed by four sample and hold circuits individually gated to match the real time occurrence of the respective servo burst fields.

Meanwhile, the microcontroller 24 completes the sector task and transitions to a spin motor control task. The primary function of spin control task is to determine any rotational speed error of the spin motor 14 based on the previous actual and expected time of occurrence of the sector mark. A spin rate adjustment value may then be determined for use in the next servo 1 field sector task.

Next, an actuator task is executed by the microcontroller 24. This task is generally initiated subsequent to the A/D conversion of the servo burst fields. The first action undertaken by the microcontroller 24 in execution of the actuator task is to determine whether an actuator seek operation is pending or on off-track error was prior determined. In either case, execution continues with a setup of a corresponding seek operation for subsequent execution. If, however, track-following is to be performed, the four servo burst corresponding digital values are processed by the microcontroller 24 to derive a quadrature servo burst track-following error value ($P_0$). Assuming that the B and C servo burst fields, as shown in Figure 5, overlap the center line of the current data sector (known by whether the current track number is odd or even), the quadrature processing of the servo burst field values is done in accordance with Equation 1:

$$P_0 = (A + B) - (C + D) \hspace{4cm} \text{Eq. 1}$$

Although all four bursts are present and available for use, an alternative is to use, per Equation 2, only the two bursts that overlap the track center line during normal track-following while using all four bursts during seeking.

$$P_0 = (B - C) \hspace{4cm} \text{Eq. 2}$$

Where the A and D sector bursts overlap the center line of the current data sector, i.e., every other track, the quadrature processing is performed in accordance with Equation 3 or, in the alternative, Equation 4:

$$P_0 = (C + D) - (A + B) \hspace{4cm} \text{Eq. 3}$$

$$P_0 = (D - A) \hspace{4cm} \text{Eq. 4}$$

A positive track-following error result is interpreted to indicate that the read/write head needs to be moved toward the inner diameter of the disk 12. The magnitude of the result gives an indication of the distance to the track center line. Thus, the microcontroller 24 may readily compute an error adjustment value based on the polarity and magnitude of the quadrature derived track-following error. The error adjustment value is combined with the current actuator position control value and written to the digital-to-analog converter of the motor and actuator controller 32. The adjusted analog actuator position control signal thereby produced results in a corrective change in the position of the actuator assembly 16 and the head 20 relative to the current data track.

The microcontroller 24 may then transition to a read/write task. Execution of the read/write task provides for the set-up, continuance, or completion of the transfer of data with respect to the current data sector.

Finally, any pending seek operation is executed by the microcontroller 24 just prior to the conclusion of the read/write task. In general, the seek operation selected during the actuator task determines an actuator position value to initiate, continue, or complete a seek operation of the actuator assembly 16. The read/write task then completes with the execution of a return from interrupt instruction.

The sector task of the servo 2 field is initiated in response to the countdown timer interrupt as scheduled in the servo 1 sector task. The microcontroller 24 then executes sector, actuator, read/write and seek tasks that are substantially identical to their counterparts executed with respect to the servo 1 field, including scheduling the count down timer interrupt for the next sector's servo 1 task start.

The balance of the sector period not otherwise spent processing the servo 1 and servo 2 fields is used to execute the interface task and, if active, the monitor task. Thus, the microcontroller 24 operates as an essentially multi-tasking processor in the control and management of the disk drive system 10.

Of particular relevance to the present invention is the monitor task. This task is normally invoked when a drive is initially powered up. The monitor task may also be invoked from the interface task to retest the drive following, for example, a reworking of the HDA to replace a disk having a too high number of physical defects. Of particular significance is the fact that the monitor task is performed at least on power up of every disk drive incorporating the present invention. Thus, testing is comprehensive, not just statistical.

The function of the monitor task is to perform a series of tests to evaluate the functionality and performance of the drive. For this purpose, a direct serial interface, via line 66, is provided to the microcontroller 24. An ordinary dumb terminal can be used to observe the progress and relative success or failure of the tests.

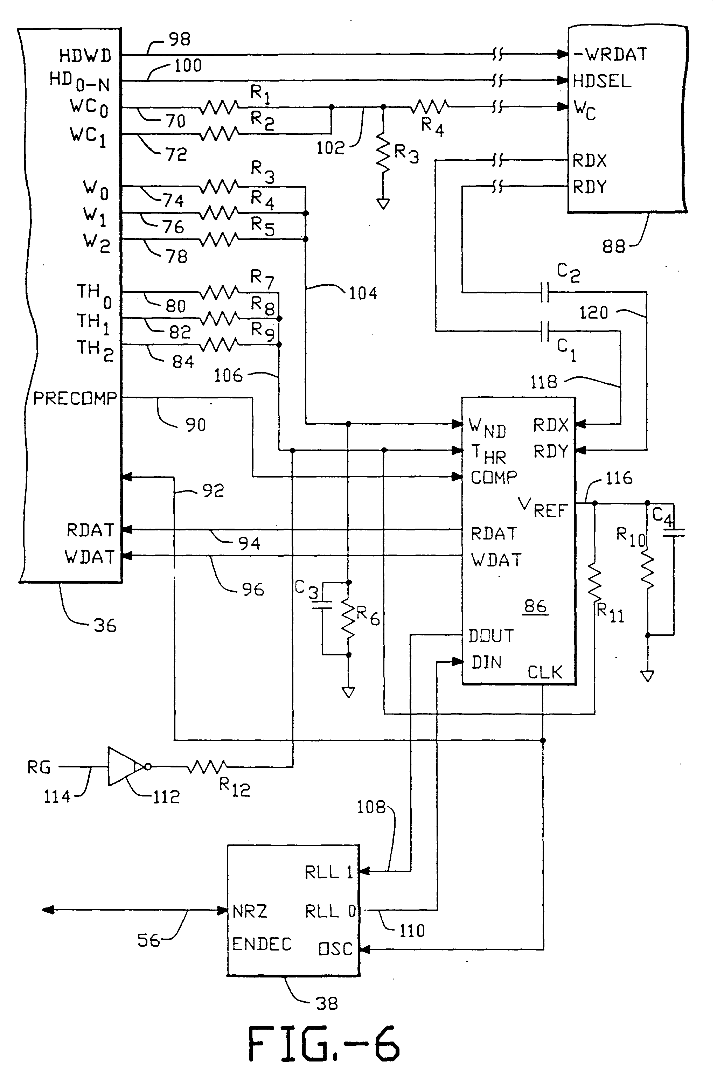

One particular aspect of the performance tests performed by the monitor task is to determine a number of programmable settings that, in turn, can be used to significantly affect the performance of the read/write data channel. These setting are programmable by the microcontroller 24 by writing control words to a conventional latched register within the read/write support circuit 36. As shown in Figure 6, nine programmable bits of a latched register directly provides the signals: precomp, on line 90; write current ($WC_{0-1}$) on lines 70, 72; read data threshold ($TH_{0-2}$) on lines 80, 82, 84; and data window delay ($W_{0-2}$) on lines 74, 76, 78. With the exception of the precomp signal, these signals are buffered, internally to the read/write support circuit, to provide open-collector transistor type outputs.

The precomp signal is provided to the read/write channel circuit 86 to select precompensation of the serial data stream as it is processed through the read/write channel circuit 86. The write data stream originates with the interface controller 28, is transferred via line 56 to the ENDEC 38 for encoding as a run length limited bit-serial stream on output line 110 to the read/write channel circuit 86. Once processed by the read/write channel circuit 86, the data stream is passed via the write data line 96 and buffered through the read/write support circuit 36 onto the hard disk write data line 98. This line passes into the hard disk assembly and to a final signal processing circuit 88 before being provided to a read/write head selected by the head select signals, on lines 100, provided from the programmable outputs ($HD_{0-n}$) of the read/write support circuit 36. In a preferred embodiment of the present invention, the circuit 88 is a conventional hard disk preamplifier and head data multiplexer circuit, such as the SSI 117 manufactured by Silicon Systems, Inc., (address) or the ML501R manufactured by Micro Linear, Inc. (address).

The write current outputs, coupled through the binary value weighting resistors R1-2 and base current level setting resistors R3-4, produce a net resistance that sets the data write current level provided by the signal processing circuit 88. In the preferred embodiment of the present invention utilizing the SSI 117, the write current level is determined by Equation 5:

$$I_{wc} = 7\text{Volts}/R_{net} * G_{wc} \hspace{4cm} \text{Eq. 5}$$

where:

$I_{wc}$     is write current in milliamperes;
$R_{net}$     is the combined resistance of R1-4 where R1 = 200 Ohms, R2 = 390 Ohms, R3 = 200 Ohms, and R4 = 0 Ohms %1%, respectively, subject to the logic levels of $WC_{0-1}$; and
$G_{wc}$     is a gain factor of 20.

Control of the data write current affords direct control of the electromagnetic writing of data bits to the surface of the disks. Ideally, a data bit is written with sufficient current to reach magnetic saturation. Writing with greater current increases the size of the magnetic domain written. This, in turn, will disturb and thereby effectively reduce the likelihood of correctly reading the adjacent domain data bits. The necessary saturation current level is directly dependent on the manufactured characteristics of the magnetic surface layer of the disk. Such characteristics may vary significantly between disk lots.

The read data is provided from the heads to and preamplified by the signal processing circuit 88. The read data differential signal are passed, via RDX and RDY lines 118, 120 out of the HDA and through decoupling capacitors C1 and C2 (680 picofarads, %2%) to the read/write channel circuit 86. There, the differential signal is amplified, using a conventional automatic gain control (AGC) stage, processed through a read data threshold detector to produce a raw data signal, and then passed through a data separator to separate the raw data clock and data from the raw data signal. The raw data signal is also buffered and provided onto the output line 94 to the read/write support circuit for sector mark detection, gray code capture and gating of the servo bursts. The separated raw data and data clock are provided to the ENDEC 38 via the data out line 108 and clock line 92.

The logic signals $TH_{0-2}$ are used to select the differential voltage level that is, in turn, used to discriminate data transitions from noise in the differential raw data signal read from the disk. The magnitude of the read data threshold level is set proportional to the voltage level established at the THR input of the read/write channel circuit 86. A resistor R11 (750 Ohms at %1% tolerance) connects the THR input to a reference voltage, $V_{ref}$, which is generated by the read/write channel circuit 86. The $V_{ref}$ potential is maintained at about 2.5 volts by the resistor R10 (4.3K Ohms at %1% tolerance) and capacitor C4 (0.0022 microfarads). This results in a preferred base threshold level of %40% of the nominal peak to peak voltage output by the AGC stage.

The voltage at the THR input can be directly altered by the selective, binary coded provision of the logic signals $TH_{0-2}$. These open collector signals are coupled through the resistors R7-9, having respective values of 62K Ohms, 120K Ohms and 240K Ohms each at a tolerance of %1%, to the line 106. The binary combinations of the signals $TH_{0-2}$ result in a corresponding reduction in the voltage at the THR input and increase in the differential threshold voltage. In the preferred embodiment of the present invention, any one of eight incremental increases of %2% of the threshold voltage level can be selected under program control. Ideally, the read data threshold is set high enough to avoid detecting noise as data transitions, but low enough to recognize low peak amplitude data bit signals. Randomly occurring low peak signals are a natural consequence of dropout in the reading of the data bits. As to be expected, the AGC stage is generally ineffective in correcting for such individual low peak amplitudes. Consequently, selection of a read data threshold is a tradeoff that can be best made in testing of the specific combination an HDA and the read/ write data channel electronics.

The output of an open collector invertor 112 is also connected, through a resistor R12 (150K Ohms) to the line 106. The input of the invertor 112 is the read gate (RG) signal, as provided by the interface controller 28 via line 114, to define the period of time when data is being read from the disk. The presence of the invertor 112 has the effect of further reducing the threshold voltage level while reading sector data, yet allowing a higher threshold voltage level while the sector header, including the grey code, is being read from the disk. The sector header is effectively written with a lower data rate and is therefore less susceptible to data bit drop out that cannot be adequately compensated for by the AGC stage.

The logic signals $W_{0-2}$ are used to select the relative timing of data transitions within a qualifying data clock window. An RC circuit formed by a parallel resistor R6 and capacitor C3 coupled between the window timing control line 104 and ground establishes an approximate baseline 25 nanosecond delay of the raw data transitions behind the occurrence of the separated data clock transitions. The resistors R3-5 allow the effective resistance of resistor R14 to be altered, depending on the logic state of the signals $W_{0-2}$, thereby reducing the delay of the raw data. In the preferred embodiments of the present invention, the resistors R6 and R3-5 are 2.0K Ohms, 6.2K Ohms, 12K Ohms and 24K Ohms, respectively, each having a tolerance of %1%. The capacitor C3 is preferably 68 picofarad. This choice of resistor and capacitor values realizes an ability to select one of eight discrete decramental delays differing by 1 nanosecond each.

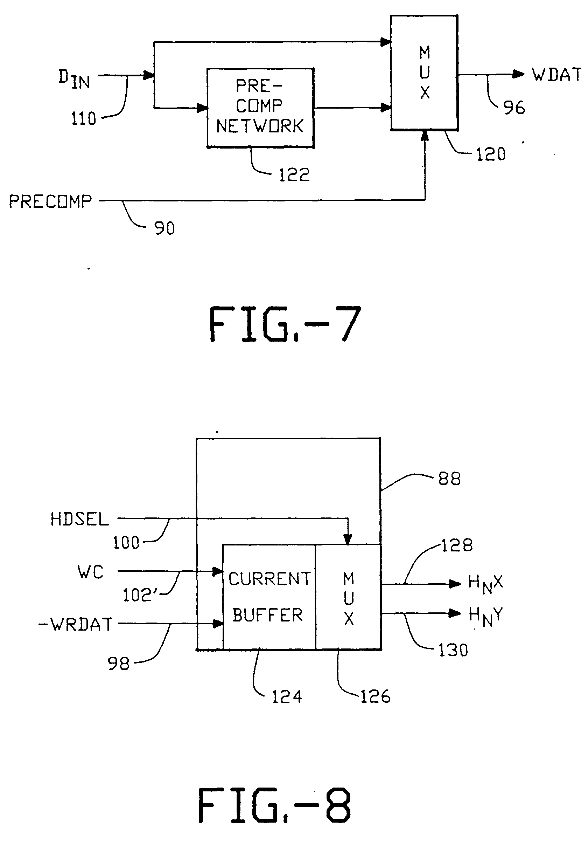

The programmable signal processing elements of the utilized in the preferred embodiments of the present invention are shown and described in greater detail relative to Figures 7-13. The programmable precompensation circuit of the present invention is shown in Figure 7. Write data, from line 110, is provided to one input of an analog signal multiplexer 120. The write data is also provided to a precompensation network 122 of conventional design. The resulting precompensated write data is provided to the second input of the multiplexer 120. The digital precomp signal, provided on line 90, is used to select, under program control, either the write data or precompensated write data for provision by the multiplexer 120 on its output line 96. Thus, there is no fixed data track, typically relative to the outer diameter of the data track band, that is used as a threshold for switching to the use of precompensated data.

Figure 8 shows the essential internal blocks of the signal processing circuit 88 utilized in achieving programmable write current selection. The signal processing circuit 88 includes a current buffer 124 whose output write current level is, as recognized in the present invention, dependent on the level of current conducted from its WC signal input. The logic state of the current buffer 124 is determined by the data provided on the write data input line 102'. The output of the current buffer 124 is provided to a differential analog signal multiplexer for provision on to one of four or eight pairs of head data lines 128, 130 that are connected to corresponding read/write heads.

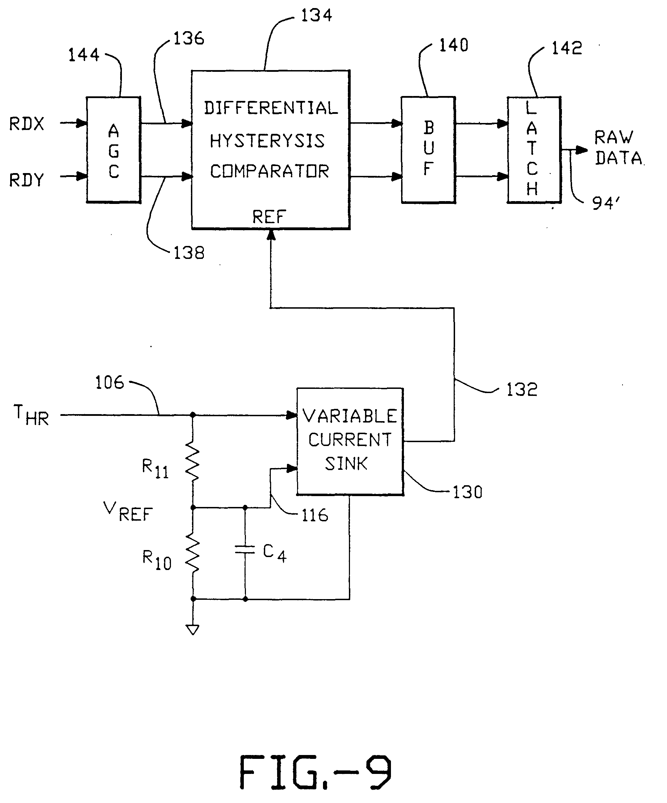

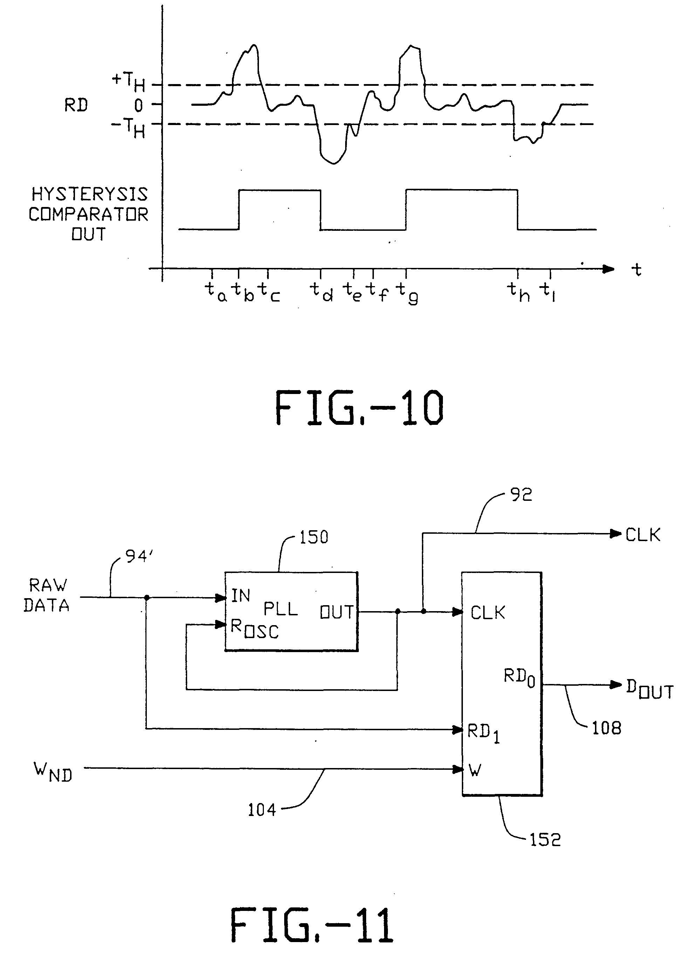

Considering now the reading of data, the raw differential read data signal, RDX, RDY, is first processed through the AGC stage 144 of the read/write channel circuit 86, as shown in Fig. 9. The AGC output signal is provided to a differential hysterisis comparator 134 via AGC output lines 136, 138. An example of the AGC output signal is shown in Figure 10. The comparator 134 functions to detect differential signal crossings of mirror positive and negative voltage thresholds, +TH and -TH. Both the positive and negative voltage thresholds are set by a common reference current. A variable current sink 130 sinks the reference current provided via line 132. The level of the reference current is set by the current sink 130 dependent on the voltage difference between the $V_{ref}$ and THR inputs 116, 106. As the voltage difference is increased, the current sink 130 draws more reference current. This results in an increase in the magnitude of the voltage thresholds used by the comparator 134 to detect data transitions.

As data transitions are detected, a differential output signal is produced that corresponds to the threshold transitions. Such is shown in Figure 10 as the hysterisis comparator output signal. Transitions are detected at $t_b$, $t_d$, $t_g$, and $t_h$. The specific value of the threshold is significant in that false transitions due to noise may occur or, conversely, a proper data transition may fail to be detected depending on the specific read data threshold used. For example, the noise peak at $t_f$ would be detected as the data transition if the magnitudes of the read data thresholds were slightly lower. The resulting data edge would therefore be early, potentially resulting in a subsequent read error. However, setting the threshold too high would result in the shallow peak amplitude signal at $t_h$ being missed entirely. Again a read error would result. The programmability of the threshold allows the non-arbitrary active selection of the largest noise margin optimally balanced against the recognition of proper data transitions uniquely with respect the noise and specific component values of the entire read/write channel electronics and attached HDA. The differential output signal is provided by the differential hysterisis comparator 134 to a buffer 140 and monostable latch 142. The latch 142 produces a logical raw data signal on its output line 92' and, therefrom, onto the RDAT output line 92.

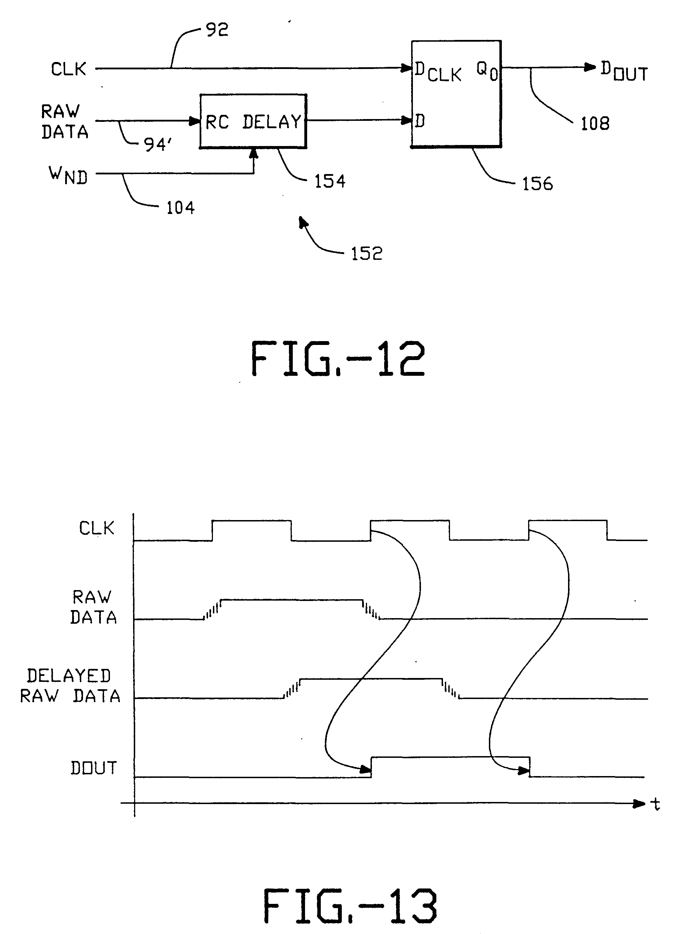

A data separator incorporating the programmable window selection control of the present invention is generally shown in Figure 11. The raw data signal, provided via line 94', is used as an input to a phase locked loop (PLL) circuit 150. The regenerated clock signal provided on the PLL output line 92 is fed back to the PLL as a reference oscillator signal. The regenerated clock, raw data signal and the window delay signal, Wnd, are provided as inputs to a data separator circuit 152.

As shown in Figure 13, the edge transitions of the raw data signal and the clock are generally aligned as a consequence of the clock being regenerated from the raw data signal itself. However, due to jitter in the raw data signal and in accordance with the present invention, it is preferred to delay the raw data signal with respect to the significant clock edge transition so-as to align the data transitions within a data window defined by significant clock edge transitions. Ideally, the delay is one-half of the clock period. However, a delay designed as a fixed amount will vary dependent on the specific component values used in the read/write channel electronics. Further, the criticality of the delay precision will increase as the serial raw data rate increases. Thus, by establishing a base delay reducible by the programmable selection of small delay periods, the present invention affords an individual adjustability of the data window with respect to the significant data transitions.

As shown in Figure 12, the raw data signal provided on line 94' is effectively delayed through an RC delay line 154. The output of the delay line 154 is provided as the D input of a D-type flip-flop 156. Finally, the flip-flop 156 provides the recovered data signal onto its $Q_o$ output line 108 ($D_{out}$).

The D input is level sensitive. The regenerated clock is provided to a $D_{clk}$ input of the flip-flop 156, via line 92. The $D_{clk}$ input is rising edge sensitive. Consequently, the RC circuit formed by resistor R6 and capacitor C3, as shown in Figure 6, is adequate to act as the RC delay 154 in providing a base delay to the raw data signal. Additional resistors R3-5, when coupled to ground, decrease the delay of the raw data signal from the rising edge of the regenerated clock signal.

Tables 5-8 below provide the algorithms executed by the monitor task to test, analyze and program the optimum programmable settings for the precompensation track, write current level, read threshold and window delay timing. While generally executed only during the initial testing of the drive, these tests can be run for recertification of the drive, upon repair for an unrelated failure, or potentially executed periodically to adapt to changing environmental and aging effects on the precise component values of the read/write channel electronics and the electromagnetic characteristics of the head and media.

```
                            Table 5
    ===================== Threshold Test=================
         initialize;
         seek to test track;
         for head 0 to 7 do
             for read threshold level 0 to 7 do
                 prepare test data to write;
                 write data to track;
                 for window delay level 0 to 7 do
                     read data from track;
                     count and store number of errors
                         for each delay level;
                 endfor
                 begin
                     calculate figure of merit
                         reflecting composite write
                         current/window/threshold
                         error levels;
                     store in data array;
                 end
             endfor
             select best threshold level setting;
             store in EEPROM;
         endfor
    ===========================================================
```

```
                            Table 6
================= Write Current Test=================
    initialize;
    seek to test track;
    for write current level 0 to 3 do
         for read threshold level 0 to 7 do
              prepare test data to write;
              write data to track;
              for window delay level 0 to 7 do
                   read data from track;
                   count and store number of errors
                        for each delay level;
              endfor
              begin
                   calculate figure of merit
                        reflecting composite write
                        current/window
                        delay/threshold error levels;
                   store in data array;
              end
         endfor
         select best write current level setting;
         store in EEPROM;
endfor==============================================


                            Table 7
================= Precompensation Test=================
    initialize;
    for ODtrack#-100 to ODtrack# do
         set precomp on;
         prepare test data to write;
         write data to track;
         for window delay level 0 to 7 do
              read data from track;
              count and store number of errors
                   for each delay level;
         endfor
         set precomp off;
         prepare test data to write;
         write data to track;
         for window delay level 0 to 7 do
              read data from track;
              count and store number of errors
                   for each delay level;
         endfor
         compare number of errors;
         select precomp level with the least number
              of errors;
         store in EEPROM;
    endfor
=========================================================
```

```
                        Table 8
    ================== Read Window Test==================
        initialize;
        seek to test track;
        prepare test data to write;
        write data to track;
        for window delay level 0 to 7 do
            read data from track;
            count and store number of errors
                for each delay level;
        endfor
        select best window delay level;
        store in EEPROM;
    ;======================================================
```

Thus, a system and method for matching the read/write channel electronics to the specific electromagnetic characteristics of a unique hard disk assembly has been disclosed.

As should be readily apparent from the foregoing disclosure, many modifications and variations of the present invention are possible in light of the above description of the preferred embodiments. It is therefore to be understood that, within the scope of the appended claims, the present invention may be practiced otherwise as specifically described herein.

**Claims**

1.   A disk drive comprising:

(a) a medium (12) for storing data in response to data signals;

(b) means (20) for transferring data signals to and from said medium;

(c) programmable means (28,36), coupled to said transferring means (20), for processing data signals transferred to and from said medium, said programmable means being responsive to first (TH0-2) and second (W0-2) programmable values, said programmable means including means for determining whether data signals transferred from said medium exceed a data discrimination level as determined by said first programmable value, **characterised in that** said programmable means further includes means for determining whether data signals transferred from said medium occur within a data signal window whose timing, relative to a data clock signal, is determined by said second programmable value; and further comprising:

(d) control means (24) for determining said first and second programmable values from respective sets of possible first and second programmable values, said control means including a microprocessor (24) coupled to said programmable means and adapted to independently programme said first and second programmable values to obtain optimal inter-dependent values for said disk drive, said optimal inter-dependent values being determined by considering combinations of each possible said first programmable value and said set of values for said second programmable value and selecting an optimal first programmable value, based on an optimal combination of said first programmable value and said set of values for said second programmable value.

2.   A disk drive as claimed in claim 1, wherein said control means includes means for determining said first and second programmable values uniquely for said medium (12) and said transferring means (20).

3.   A disk drive as claimed in claim 1 or claim 2, wherein said programmable means further includes means responsive to a third programmable value (WC0-1) for selecting a level of write current for use in transferring data signals to said transferring means, and wherein said control means is adapted to independently determine said third programmable value from a set of possible third programmable values to obtain optimal inter-dependent values for said disk drive, said optimal inter-dependent values being determined by considering combinations of each possible said third programmable value and a set of combinations of values for said first and second programmable values and selecting an optimal third programmable value, based on an optimal combination of said third programmable value and said set of combinations.

4.   A disk drive as claimed in claim 1, 2 or 3, wherein said medium stores data in a plurality of data tracks (22) and wherein said programmable means further includes means responsive to a fourth programmable value (PRECOMP) for selecting whether to precompensate data signals transferred to said transferring means with respect to a predetermined data track, and wherein said control means is adapted to independently determine said fourth programmable value from a set of possible fourth programmable values to obtain optimal inter-dependent values for said disk drive, said optimal inter-dependent values being determined by considering combinations of each possible said fourth programmable value and said set of values for said second programmable value and selecting an optimal fourth programmable value, based on an optimal combination of said fourth programmable value and said set of values for said second programmable value.

5.  A disk drive as claimed in claim 1, further comprising:

a disk assembly including said medium (12) for storing data in a plurality of data tracks (22); means (14) for rotating said medium; a read/write head (20) positionable over said medium for reading and writing data with respect to a predetermined data track of said medium, and means (18) for positioning said read/write head; an electronics assembly coupled to said head (20), said electronics assembly including first programmable means for selecting a threshold for determining whether data signals transferred from said medium exceed said threshold; second programmable means for selecting a data window to determine whether data signals transferred from said medium occur within said data window, third programmable means for selecting a write current level to be used in writing data said medium; and fourth programmable means for selecting to precompensate data to be written to the data tracks; and said control means (24) for independently selecting first, second, third and fourth programmable values from respective sets of possible first, second, third and fourth programmable values to obtain optimal inter-dependent values to be provided to said first, second, third and fourth programmable means, respectively, said optimal inter-dependent values being determined by:

considering combinations of each possible said third programmable value and a set of combinations of values for said first and second programmable values and selecting an optimal third programmable value, based on an optimal combination of said third programmable value and said set of combinations, and considering combinations of each possible said fourth programmable value and said set of values for said second programmable value and selecting an optimal fourth programmable value, based on an optimal combination of said fourth programmable value and said set of values for said second programmable value.

6.  A disk drive as claimed in claim 1, wherein said first and second programmable values are respective first and second control signals of a plurality of signal levels where said first and second control signals are provided at respective ones of said plurality of signal levels, said programmable means including:

means for determining whether data signals transferred from said medium exceeds a data discrimination level, said determining means being responsive to the level of said first control signal for selecting said data discrimination level from a plurality of discrimination levels; means for selecting a data signal window, relative to a data clock signal, within which to accept data signals transferred from said medium, said selecting means being responsive to the level of said second control signal for selecting the relative timing of said data signal window from a plurality of data signal window timings relative to said data clock signal; and said control means (24) for determining the ones of said pluralities of signal levels at which said first and second control signals are provided to said programmable means, said control means including a microprocessor (24) coupled to said programmable means.

**Patentansprüche**

1.  Plattenlaufwerk mit:

(a) einem Medium (12) zum Speichern von Daten in Abhängigkeit von Datensignalen,

(b) Einrichtungen (20) zur Übertragung von Datensignalen zu und von dem Medium

(c) programmierbaren Einrichtungen (28, 36), die mit den Übertragungseinrichtungen (20) gekoppelt sind, um zu und von dem Medium übertragene Datensignale zu verarbeiten, wobei die programmierbaren Einrichtungen auf erste (TH0-2) und zweite (W0-2) programmierbare Werte ansprechen, wobei die programmierbaren Einrichtungen zur Feststellung einschließen, ob von dem Medium übertragene Datensignale einen Datendiskriminierungspegel übersteigen, wie er durch den ersten programmierbaren Wert bestimmt ist, **dadurch gekennzeichnet, daß** die programmierbare Einrichtung weiterhin Einrichtungen zur Feststellung einschließt, ob von dem Medium übertragene Datensignale innerhalb eines Datensignalfensters auftreten, dessen Zeitsteuerung bezogen auf ein Datentaktsignal durch den zweiten programmierbaren Wert bestimmt ist, und daß sie weiterhin:

(d) Steuereinrichtungen (24) zur Bestimmung der ersten und zweiten programmierbaren Werte aus jeweiligen Sätzen von möglichen ersten und zweiten programmierbaren Werten aufweist, wobei die Steuereinrichtungen einen Mikroprozessor (24) einschließen, der mit den programmierbaren Einrichtungen gekoppelt und so ausgebildet ist, daß er unabhängig die ersten und zweiten programmierbaren Werte programmiert, um optimale wechselseitig abhängige Werte für das Plattenlaufwerk zu gewinnen, wobei die optimalen wechselseitig abhängigen Werte dadurch bestimmt werden, daß Kombinationen jedes möglichen der ersten programmierbaren Werte und des Satzes von Werten für den zweiten programmierbaren Wert betrachtet und ein optimaler erster programmierbarer Wert auf der Grundlage einer optimalen Kombination des ersten programmierbaren Wertes und des Satzes von Werten für den zweiten programmierbaren Wert bestimmt wird.

2. Pfattenlaufwerk nach Anspruch 1, bei dem die Steuereinrichtung eine Einrichtung zur Bestimmung der ersten und zweiten programmierbaren Werte in einzigartiger Weise für das Medium (12) und die Übertragungseinrichtung (20) einschließt.

3. Plattenlaufwerk nach Anspruch 1 oder 2, bei dem die programmierbare Einrichtung weiterhin auf einen dritten programmierbaren Wert (WC0-1) ansprechende Einrichtungen zur Auswahl eines Pegels des Schreibstromes zur Verwendung bei der Übertragung von Datensignalen an die Übertragungseinrichtung einschließt, und bei dem die Steuereinrichtung so ausgebildet ist, daß sie unabhängig den dritten programmierbaren aus einem Satz von möglichen dritten programmierbaren Werten bestimmt, um optimale wechselseitig abhängige Werte für das Plattenlaufwerk zu gewinnen, wobei die optimalen wechselseitig abhängigen Werte dadurch bestimmt werden, daß Kombinationen jedes möglichen der dritten programmierbaren Werte und ein Satz von Kombinationen von Werten für die ersten und zweiten programmierbaren Werte betrachtet und ein optimaler dritter programmierbarer Wert auf der Grundlage einer optimalen Kombination des dritten programmierbaren Wertes und des Satzes von Kombinationen ausgewählt wird.

4. Plattenlaufwerk nach Anspruch 1, 2 oder 3, bei dem das Medium Daten in einer Vielzahl von Datenspuren (22) speichert und bei dem die programmierbare Einrichtung weiterhin eine auf einen vierten programmierbaren Wert (PRECOMP) ansprechende Einrichtung zur Auswahl einschließt, ob Datensignale, die an die Übertragungseinrichtungen übertragen werden, bezüglich einer vorgegebenen Datenspur vorkompensiert werden sollen, und bei dem die Steuereinrichtung so ausgebildet ist, daß sie unabhängig den vierten programmierbaren Wert aus einem Satz von möglichen vierten programmierbaren Werten bestimmt, um optimale wechselseitig abhängige Werte für das Plattenlaufwerk zu gewinnen, wobei die optimalen wechselseitig abhängigen Werte dadurch bestimmt werden, daß Kombinationen jedes möglichen der vierten programmierbaren Werte und des Satzes von Werten für den zweiten programmierbaren Wert betrachtet und ein optimaler vierter programmierbarer Wert auf der Grundlage einer optimalen Kombination des vierten programmierbaren Wertes und des Satzes von Werten für den zweiten programmierbaren Wert ausgewählt wird.

5. Plattenlaufwerk nach Anspruch 1, das weiterhin folgendes umfaßt:

eine Plattenbaugruppe, die das Medium (12) zum Speichern von Daten in einer Vielzahl von Datenspuren (22), Einrichtungen (14), die das Medium in Drehung versetzen, einen Lese-/Schreibkopf (20), der über dem Medium zum Lesen und Schreiben von Daten bezüglich einer vorgegebenen Datenspur des Mediums positionierbar ist, und Einrichtungen (18) zum Positionieren des Lese-/Schreibkopfes einschließt,

eine Elektronikbaugruppe, die mit dem Kopf (20) gekoppelt ist, wobei die Elektronikbaugruppe eine erste programmierbare Einrichtung zur Auswahl eines Schwellenwertes zum Bestimmen, ob Datensignale, die von dem Medium übertragen werden, den Schwellenwert überschreiten, eine zweite programmierbare Einrichtung zur Auswahl eines Datenfensters zur Feststellung, ob von dem Medium übertragene Datensignale innerhalb des Datenfensters auftreten, dritte programmierbare Einrichtungen zur Auswahl eines Schreibstrompegels, der zum Schreiben von Daten auf das Medium zu verwenden ist, und vierte programmierbare Einrichtungen zur Auswahl einer Vorkompensation von auf die Datenspuren zu schreibenden Daten einschließt, und

wobei die Steuereinrichtungen (24) zur unabhängigen Auswahl erster, zweiter, dritter und vierter programmierbarer Werte aus jeweiligen Sätzen von möglichen ersten, zweiten, dritten und vierten programmierbaren Werten vorgesehen sind, um optimale wechselseitig abhängige Werte zu gewinnen, die den ersten, zweiten, dritten bzw. vierten programmierbaren Einrichtungen zuzuführen sind, wobei die optimalen wechselseitig abhängigen Werte dadurch bestimmt werden, daß:

Kombinationen jedes möglichen der dritten programmierbaren Werte und eines Satzes von Werten für die ersten und zweiten programmierbaren Werte betrachtet und ein optimaler dritter programmierbarer Wert auf der Grundlage einer optimalen Kombination des dritten programmierbaren Wertes und des Satzes von Kombinationen ausgewählt wird, und

Kombinationen jedes möglichen der vierten programmierbaren Werte und des Satzes von Werten für den zweiten programmierbaren Wert betrachtet werden und ein optimaler vierter programmierbarer Wert auf der Grundlage einer optimalen Kombination des vierten programmierbaren Wertes und des Satzes von Werten für den zweiten programmierbaren Wert ausgewählt wird.

6. Plattenlaufwerk nach Anspruch 1, bei dem die ersten und zweiten programmierbaren Werte jeweilige erste und zweite Steuersignale mit einer Vielzahl von Signalpegeln sind, wobei die ersten und zweiten Steuersignale mit jeweiligen der Vielzahl von Signalpegeln geliefert werden, wobei die programmierbare Einrichtung folgendes einschließt:

Einrichtungen zur Feststellung, ob die von dem Medium übertragenen Signale einen Datendiskriminationspegel übersteigen, wobei die Feststellungseinrichtungen auf den Pegel des ersten Steuersignals ansprechen, um den Diskriminationspegel aus einer Vielzahl von Diskriminationspegeln auszuwählen,

Einrichtungen zur Auswahl eines Datenfensters bezogen auf ein Datentaktsignal, innerhalb dessen von dem Medium übertragene Daten akzeptiert werden sollen, wobei die Auswahleinrichtung auf den Pegel des zweiten Steuersignals anspricht, um die relative Zeitlage des Datensignalfensters aus einer Vielzahl von Datensignalfenster-Zeitlagen bezogen auf das Datentaktsignal auszuwählen, und

wobei die Steuereinrichtungen (24) diejenigen der Vielzahl von Signalpegeln bestimmen, mit denen die ersten und zweiten Steuersignale an die programmierbaren Einrichtungen geliefert werden, wobei die Steuereinrichtung einen mit der programmierbaren Einrichtung gekoppelten Mikroprozessor (24) einschließt.

## Revendications

1. Mémoire à disques, comprenant :

(a) un support (12) destiné à mémoriser des données en réponse à des signaux de données ;
(b) un moyen (20) servant au transfert de signaux de données vers ledit support et à partir de celui-ci ;
(c) des moyens programmables (28, 36), reliés audit moyen de transfert (20), pour le traitement de signaux de données transférés vers ledit support et à partir de celui-ci, lesdits moyens programmables réagissant à des première (TH0-2) et deuxième (W0-2) valeurs programmables, lesdits moyens programmables comprenant des moyens servant à déterminer si des signaux de données, transférés à partir dudit support, dépassent ou non un niveau de discrimination de données, tel que déterminé par ladite première valeur programmable, **caractérisée en ce que** lesdits moyens programmables comprennent en outre des moyens servant à déterminer si des signaux de données, transférés à partir dudit support, apparaissent dans les limites d'une fenêtre de signaux de données dont le positionnement temporel, par rapport à un signal d'horloge de données, est déterminé par ladite deuxième valeur programmable, et comprenant en outre :
(d) un moyen de commande (24) prévu pour déterminer lesdites première et deuxième valeurs programmables à partir d'ensembles respectifs de premières et deuxièmes valeurs programmables possibles, ledit moyen de commande comprenant un microprocesseur (24), relié auxdits moyens programmables et propre à programmer, de manière indépendante, lesdites première et deuxième valeurs programmables afin d'obtenir des valeurs interdépendantes optimales pour ladite mémoire à disques, lesdites valeurs interdépendantes optimales étant déterminées en tenant compte de combinaisons de chaque première valeur programmable possible et dudit ensemble de valeurs pour ladite deuxième valeur programmable, et en sélectionnant une première valeur programmable optimale, sur la base d'une combinaison optimale de ladite première valeur programmable et dudit ensemble de valeurs pour ladite deuxième valeur programmable.

2. Mémoire à disques selon la revendication 1, dans laquelle ledit moyen de commande comprend des moyens servant à la détermination desdites première et deuxième valeurs programmables, uniquement pour ledit support (12) et pour ledit moyen de transfert (20).

3. Mémoire à disques selon la revendication 1 ou la revendication 2, dans laquelle lesdits moyens programmables comprennent en outre des moyens réagissant à une troisième valeur programmable (WC0-1) pour la sélection d'un niveau de courant d'écriture à utiliser lors du transfert de signaux de données vers ledit moyen de transfert, et dans laquelle ledit moyen de commande est propre à déterminer, de manière indépendante, ladite troisième valeur programmable à partir d'un ensemble de troisièmes valeurs programmables possibles, afin d'obtenir des valeurs interdépendantes optimales pour ladite mémoire à disques, lesdites valeurs interdépendantes optimales étant déterminées en tenant compte de combinaisons de chaque troisième valeur programmable possible et d'un ensemble de combinaisons de valeurs pour lesdites première et deuxième valeurs programmables, et en sélectionnant une troisième valeur programmable optimale, sur la base d'une combinaison optimale de ladite troisième valeur programmable et dudit ensemble de combinaisons.

4. Mémoire à disques selon la revendication 1, 2 ou 3, dans laquelle ledit support conserve des données dans une pluralité de pistes de données (22), et dans laquelle lesdits moyens programmables comprennent en outre des moyens réagissant à une quatrième valeur programmable (PRECOMP) afin de choisir s'il faut ou non précompenser des signaux de données, transférés vers ledit moyen de transfert, par rapport à une piste prédéterminée de données, et dans laquelle ledit moyen de commande est propre à déterminer, de manière indépendante, ladite quatrième valeur programmable à partir d'un ensemble de quatrièmes valeurs programmables possibles afin d'obtenir des valeurs interdépendantes optimales pour ladite mémoire à disques, lesdites valeurs interdépendantes optimales étant déterminées en tenant compte de combinaisons de chaque quatrième valeur programmable possible et dudit ensemble de valeurs pour ladite deuxième valeur programmable, et en sélectionnant une quatrième valeur programmable optimale, sur la base d'une combinaison optimale de ladite quatrième valeur programmable et dudit ensemble de valeurs pour ladite deuxième valeur programmable.

5. Mémoire à disques selon la revendication 1, comprenant en outre :

un ensemble à disques, comprenant ledit support (12) pour la conservation de données dans une pluralité de pistes de données (22) ; un moyen (14) pour entraîner en rotation ledit support ; une tête de lecture/écriture (20) propre à être placée au-dessus dudit support pour la lecture et l'écriture de données par rapport à une piste prédéterminée de données dudit support, et un moyen (18) pour le positionnement de ladite tête de lecture/écriture ;

un ensemble électronique, relié à ladite tête (20), ledit ensemble électronique comprenant un premier moyen programmable pour la sélection d'un seuil afin de déterminer si des signaux de données, transférés à partir dudit support, dépassent ou non ledit seuil ; un deuxième moyen programmable servant à la sélection d'une fenêtre de données afin de déterminer si des signaux de données, transférés à partir dudit support, apparaissent ou non dans les limites de ladite fenêtre de données ; un troisième moyen programmable servant à la sélection d'un niveau de courant d'écriture, à utiliser lors de l'écriture de données sur ledit support ; et un quatrième moyen programmable prévu pour la sélection d'une précompensation de données à écrire sur les pistes de données ; et

ledit moyen de commande (24) pour la sélection, de manière indépendante, d'une première, d'une deuxième, d'une troisième et d'une quatrième valeurs programmables à partir d'ensembles respectifs de premières, deuxièmes, troisièmes et quatrièmes valeurs programmables possibles, afin d'obtenir des valeurs interdépendantes optimales à fournir respectivement auxdits premier, deuxième, troisième et quatrième moyens programmables, lesdites valeurs interdépendantes optimales étant déterminées par :

la prise en compte de combinaisons de chaque troisième valeur programmable possible et d'un ensemble de combinaisons de valeurs pour lesdites première et deuxième valeurs programmables, et la sélection d'une troisième valeur programmable optimale, sur la base d'une combinaison optimale de ladite troisième valeur programmable et dudit ensemble de combinaisons , et

la prise en compte de combinaisons de chaque quatrième valeur programmable possible et dudit ensemble de valeurs pour ladite deuxième valeur programmable, et la sélection d'une quatrième valeur programmable optimale, sur la base d'une combinaison optimale de ladite quatrième valeur programmable et dudit ensemble de valeurs pour ladite deuxième valeur programmable.

6. Mémoire à disques selon la revendication 1, dans laquelle lesdites première et deuxième valeurs programmables sont des premier et deuxième signaux de commande respectifs, d'une pluralité de niveaux de signaux, lesdits premier et deuxième signaux de commande étant fournis à des niveaux respectifs parmi ladite pluralité de niveaux de signaux, lesdits moyens programmables comprenant :

des moyens servant à déterminer si des signaux de données, transférés à partir dudit support, dépassent ou non un niveau de discrimination de données, lesdits moyens de détermination réagissant au niveau dudit premier signal de commande pour sélectionner ledit niveau de discrimination de données à partir d'une pluralité de niveaux de discrimination ;

des moyens pour sélectionner une fenêtre de signaux de données, par rapport à un signal d'horloge de données, dans les limites de laquelle doivent être acceptés des signaux de données, transférés à partir dudit support, lesdits moyens de sélection réagissant au niveau dudit deuxième signal de commande pour sélectionner le positionnement temporel relatif de ladite fenêtre de signaux de données, à partir d'une pluralité de positionnements temporels de fenêtres de signaux de données, par rapport audit signal d'horloge de données ; et

ledit moyen de commande (24) pour déterminer ceux des niveaux, parmi ladite pluralité de niveaux de signaux, auxquels lesdits premier et deuxième signaux de commande sont fournis auxdits moyens programmables, ledit moyen de commande comprenant un microprocesseur (24), relié auxdits moyens programmables.

FIG.-1

| SECTOR $N_N$ | SECTOR $N_0$ | SECTOR $N_1$ | SECTOR $N_2$ | SECTOR $N_3$ |

FIG.-2

FIG.-3a

| SERVO 1 | DATA 1 | E C C | G A P | DATA 2 | E C C | G A P |

FIG.-3b

| M A R K | GREY CODE | SERVO BURST | ID SYNC | ID | DATA SYNC | DATA 1 | M A R K | GREY CODE | SERVO BURST | DATA SYNC | DATA 2 |

FIG.-4

SECTOR TASK | SPIN TASK | ACT. TASK | R/W TASK

SECTOR TASK | ACT. TASK | R/W TASK

FIG.-5

SERVO SYNC | GREY CODE | A | B | C | D | ID SYNC | ID
MARK

SERVO SYNC | GREY CODE | A | B | C | D | DATA SYNC | DATA
MARK

FIG.-6

$D_{IN}$ → 110

PRE- COMP NETWORK — 122

M U X — 120

→ WDAT — 96

PRECOMP — 90

# FIG.-7

88

HDSEL — 100

WC — 102'

-WRDAT — 98

CURRENT BUFFER — 124

M U X — 126

→ $H_N X$ — 128

→ $H_N Y$ — 130

# FIG.-8

FIG.-9

# FIG.-10

# FIG.-11

FIG.-12

FIG.-13